# EUROPEAN PATENT SPECIFICATION

(11) **EP 3 119 675 B1**
(45) Date of publication and mention of the grant of the patent: **04.03.2020**
(21) Application number: 15766032.5
(22) Date of filing: 18.03.2015
(51) Int. Cl.: B60N 3/00, B64D 11/06

(54) **LATTICE PANEL STRUCTURE AND METHOD**
GITTERPLATTENSTRUKTUR UND VERFAHREN
STRUCTURE DE PANNEAU EN TREILLIS ET PROCÉDÉ

(30) Priority: 19.03.2014 US 201461955405 P
(43) Date of publication of application: 25.01.2017
(73) Proprietor: B/E Aerospace, Inc., Wellington, FL 33414 (US)
(72) Inventor: GARING, Francis, Xavier, Atlanta, GA 30306 (US)
(74) Representative: Appleyard Lees IP LLP
(86) International application number: PCT/US2015/021218
(87) International publication number: WO 2015/143021

(56) References cited:
- WO-A1-99/04381
- WO-A1-2010/138066
- DE-C1- 19 820 732
- US-A- 4 923 544
- US-A1- 2007 251 170
- US-A1- 2013 169 009
- US-B2- 6 736 569
- US-B2- 6 736 569

## Description

### TECHNICAL FIELD AND BACKGROUND OF THE INVENTION

This invention relates to a light weight panel structure that exhibits a three dimensional lattice structure fabricated from a homogenous material through a two sided or split draw manufacturing process such as machining, injection molding, casting or three dimensional printing, and a method of producing such panels. Such three dimensional structures are most often associated with chemical structures formed from regular, periodic arrays of atoms and molecules, while two dimensional lattices are most often associated with structures or patterns of strips crossing each other with square or diamond-shaped spaces left between. The three dimensional lattice panels according to the various aspects of the invention can be used for components such as tray tables and other components that require light weight and rigid performance. These structures will be particularly useful in aircraft, where weight reduction is an important factor in decreasing fuel consumption and improving aircraft performance.

The structure is characterized by a two dimensional pattern of holes formed on opposing sides, with the pattern on one side offset from the opposing side such that only parts of the holes on opposing sides overlap. This allows removal of material while leaving a series of support posts orthogonal to the machining tool direction or injection molding draw direction. The combination of posts and thin material sections created by this geometry results in a three dimensional lattice structure that is rigid in both bending and torsion.

### SUMMARY OF THE INVENTOR

It is therefore an object of the present disclosure to provide a lattice panel structure that can be produced out of a single homogenous material instead of being a composite structure that is bonded, welded, or otherwise fixed together.

It is another object of the present disclosure to provide a lattice panel structure that can be produced using a single process, such as machining, injection molding, casting or three-dimensional printing, instead of requiring multiple production and assembly processes.

It is another object of the present disclosure to provide a lattice panel structure with mechanical properties that can be accurately duplicated since it is comprised of a single homogenous material.

It is another object of the present disclosure to provide a lattice panel structure that does not require use of any adhesives.

The invention provides a tray table according to claims 1-9 and a method of forming a tray table according to claims 10-14.

### BRIEF DESCRIPTION OF THE DRAWING FIGURES

The present invention is best understood when the following detailed description of the invention is read with reference to the accompanying drawings, in which:
Figure 1 is a perspective view of an aircraft passenger seat including a tray table fabricated of a lattice panel according to one embodiment of the invention;
Figure 2 is a top plan view of the lattice panel of the tray table shown in Figure 1;
Figure 3 is a perspective cross-sectional view illustrating where material is removed to form the lattice panel;
Figure 4 is a top plan schematic view showing the structure of the lattice panel of Figures 1-3;
Figure 5 is a top plan schematic view showing an alternative structure of a lattice panel wherein the holes forming the lattice are rectangular; and
Figure 6 is a top plan schematic view showing another alternative structure of a lattice panel wherein the holes forming the lattice are hexagonal.

### DETAILED DESCRIPTION OF THE PREFERRED EMOBIDMENT

Referring now specifically to the drawings, an aircraft passenger seat 10 is shown, which includes a base 12, a seat bottom 14, seat back 16, head rest 18, arm rest 20 and a tray table 22 mounted in a conventional manner on a pair of arms 24, 26 and a cross-member 28. The tray table includes a lattice panel 30 according to one embodiment of the invention overlaid with a thin plastic imperforate cover 32. The tray table 22 is exemplary of many uses of the lattice panel 30 and is used by way of example only. Because of the substantial amount of material that is removed in the formation process, weight is substantially reduced while maintaining strength and rigidity.

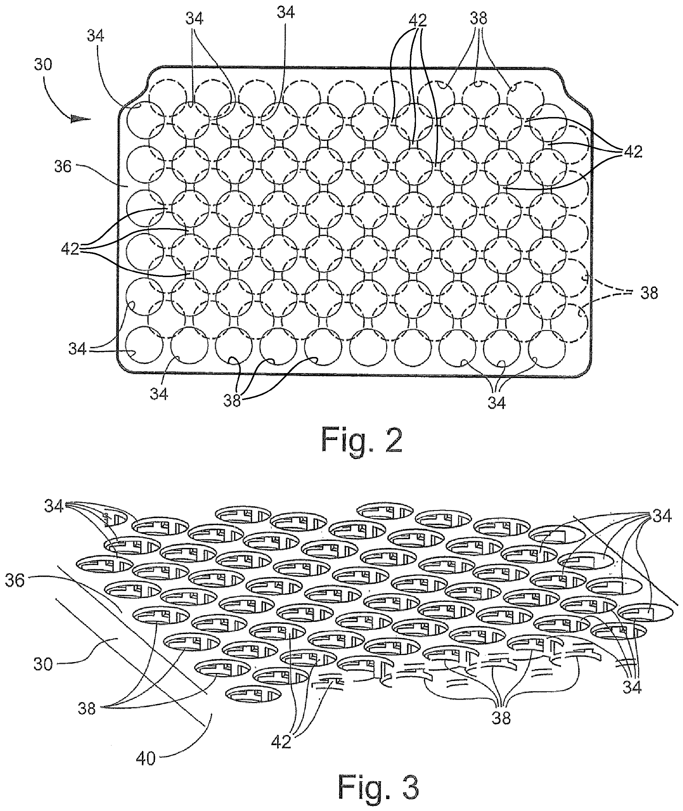

As is best shown in Figures 2 and 3, the lattice panel 30 is formed of a multitude of holes 34 in a regular array on a top side 36, and which extend through the thickness of the panel 30 except to the extent that the holes 34 are offset with regard to holes 38 formed in the bottom side 40 of the panel 30. The holes 38 are offset with respect to the holes 34 in the manner shown, leaving a multitude of spaced support posts 42, shown in Figure 3, which provide both light weight and rigidity to the panel 30. The resulting structure has three distinct aspects: through voids where the holes 34 and 38 overlap, offset areas having the thickness of the top 36 and bottom 40 where the holes 34 and 38 do not overlap, and support posts 42 which are integral to the panel 30 and extend from the top surface of the top 36 to the bottom surface of the bottom 40. The support posts 42 are orthogonal, *i.e*., are axially mutually perpendicular to the machining tool direction or injection molding draw direction.

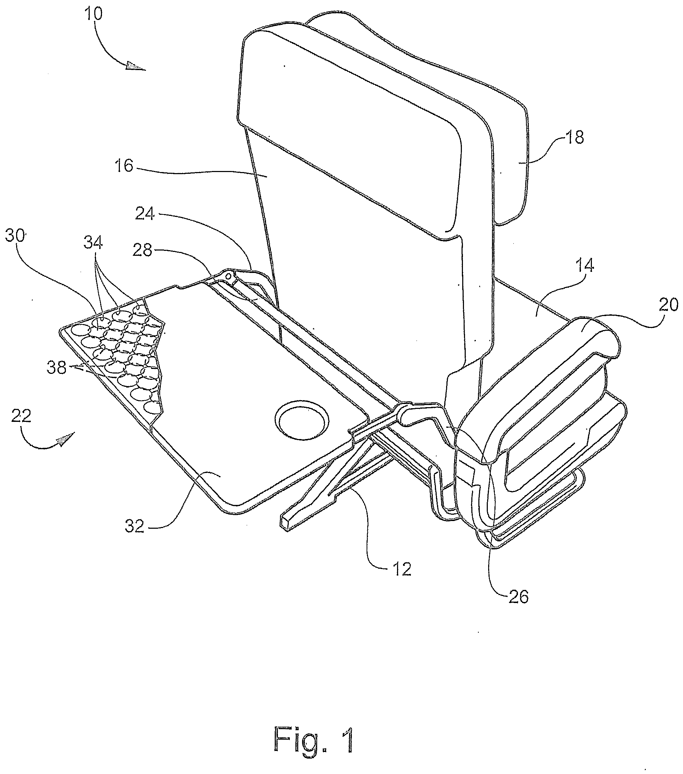

In appropriate applications the panel 30 can be left bare to allow free air flow through its thickness. In other applications, for example, the tray table 22 of Figure 1, the panel 30 may be provided with a cover, such as cover 32 on one or both sides to form an imperforate structure. The cover 32 may be attached by an adhesive, by shrink-wrapping or any other suitable method.

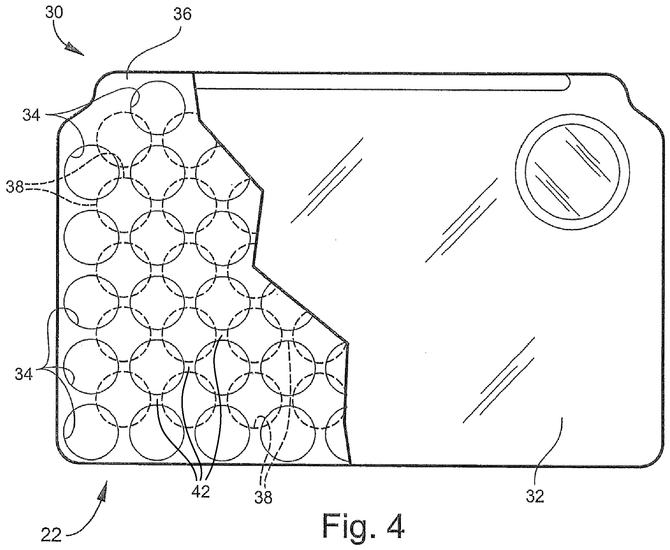

The above-described geometry is further illustrated in Figure 4, where the two dimensional hole patterns are shown to generate the desired three dimensional geometry. The solid lines represent the holes 34 in the top 36 and the dashed lines represent holes 38 created from the bottom 40. The areas not encompassed by either a solid or dashed profile represent the support posts 42.

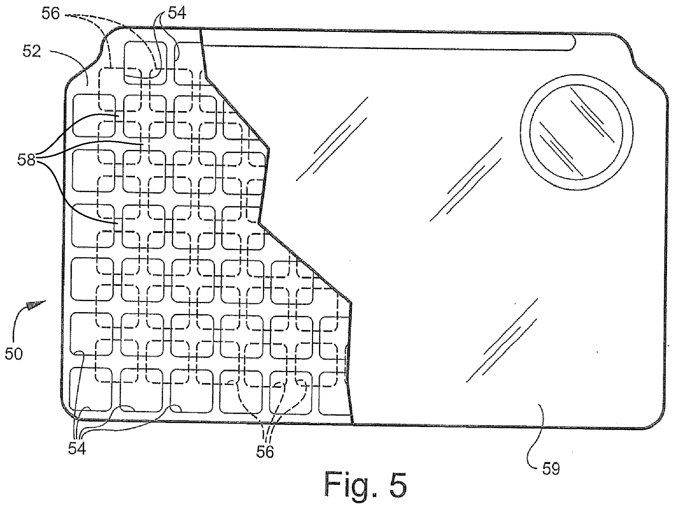

An alternative geometry is illustrated in Figure 5, again shown for purposes of illustration as a tray table 50 fabricated of a panel lattice panel 52. The panel 52 is formed of holes 54 in the top of the panel 52, shown in solid lines, and is offset from holes 56, shown by dashed lines, in the bottom of the panel 52. The areas not encompassed by either solid or dashed lines represent support posts 58. The optional cover 59 is also shown.

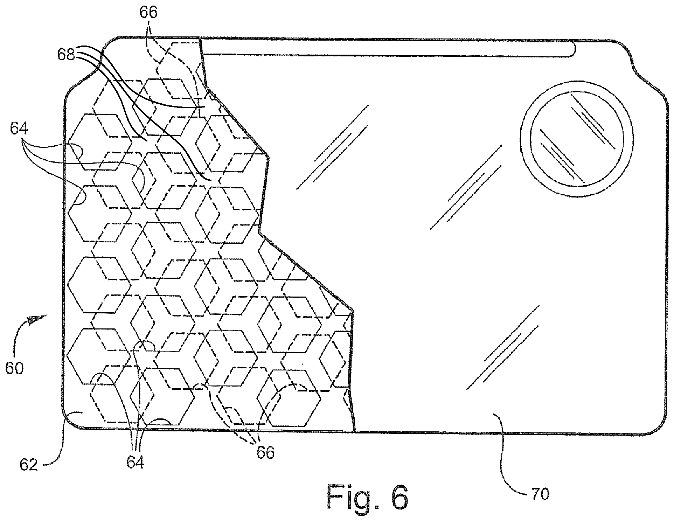

A further alternative geometry is illustrated in Figure 6, again shown for purposes of illustration as a tray table 60 fabricated of a panel lattice panel 62. The panel 62 is formed of holes 64 in the top of the panel 62, shown in solid lines, and is offset from holes 66, shown by dashed lines, in the bottom of the panel 62. The areas not encompassed by either solid or dashed lines represent support posts 68. The optional cover 70 is also shown.

Other geometrical shapes may be utilized, including without limitation, triangular, ovoid, pentagonal, octagonal or any other suitable shape that permits formation of the three aspects of the structure discussed above. Formation of the lattice panel structure is not critical to a specific formation technique, and while it is believed that formation techniques that result in an integral, one-piece structure is optimal, formation of two or more separate components that are then assembled to form the lattice structure is accommodated within the scope of the invention.

As used herein, the term "hole" means any opening, void or cavity having either a circular or non-circular shape or profile, and extending either partially through or completely through the thickness of the structure. The structure can be produced by any suitable manufacturing process, such as by molding, casting, machining, laser-cutting, 3-dimensional printing, or the like.

Similarly, while the embodiments disclosed in this application illustrate the invention with holes of the same shape and size in respective embodiments, lattices with regular arrays of holes of different shapes and/or sizes on one or both sides are accommodated within the scope of the invention.

A lattice panel structure according to the disclosure has been described with reference to specific examples. Furthermore, the foregoing description of the preferred embodiments of the invention and best mode for practicing the invention are provided for the purpose of illustration only and not for the purpose of limitation, the invention being defined by the claims.

## Claims

1. A tray table (22) for an aircraft cabin, comprising:
(a) a three dimensional lattice panel structure (30) having a top side (36) and a spaced-apart bottom side (40), wherein a multitude of holes (34) are formed in the top side (36) and a multitude of holes (38) are formed in the bottom side (40);
(b) an imperforate cover (32) positioned over the top side (36) of the panel structure (30) to provide a support surface for an occupant seated aft of the tray table; and
(c) a pair of arms (24, 26) attached to the panel structure (30) for mounting the panel structure (30) to a passenger seat positioned forward of an aft-seated occupant;
**characterised in that** the holes (34) formed in the top side (36) are mutually offset with regard to the holes (38) formed in the bottom side (40) so as to intersect to form voids with interspersed support posts (42) interconnecting the top side and the bottom side of the panel structure (30) in areas not encompassed by the mutually offset holes (34, 38).

2. The tray table (22) according to claim 1, and including an imperforate cover (32) enclosing the bottom side (40) of the panel structure (30).

3. The tray table (22) according to claim 1, wherein:
(a) the mutually offset holes (34) formed in the top side (36) of the panel structure (30) are circular;
(b) the mutually offset holes (38) formed in the bottom side (40) of the panel structure (30) are circular; and
(c) the support posts (42) define in cross-section arcuate wall segments corresponding to the shape and position of arcuate portions of the holes (34) formed in the top side (36) of the panel structure (30) and the holes (38) formed in the bottom side (40) of the panel structure (30).

4. The tray table (22) according to claim 1, wherein the support posts (42) define in cross-section wall segments corresponding to the shape and position of portions of the holes (34) formed in the top side (36) of the panel structure (30) and the holes (38) formed in the bottom side (40) of the panel structure (30).

5. The tray table (22) according to claim 1 or claim 4, wherein the mutually offset holes (34, 38) are selected from the group consisting of circular, rectangular and hexagonal holes.

6. The tray table (22) according to claim 1 or claim 4, wherein the mutually offset holes (34, 38) are the same shape and size.

7. The tray table (22) according to claim 1 or claim 4, wherein the panel structure (30) is integrally formed.

8. The tray table (22) according to claim 4, wherein the support posts (42) are spaced-apart around the periphery of the holes (34) formed in the top side (36) of the panel structure (30) and the holes (38) formed in the bottom side (40) of the panel structure (30).

9. The tray table (22) according to claim 4, wherein the holes (34) formed in the top side (36) of the panel structure (30) and the holes (38) formed in the bottom side (40) of the panel structure (30) define respective intermediate top and bottom panel portions that isolate the holes (34) formed in the top side (36) of the panel structure (30) from each other and isolate the holes (38) formed in the bottom side (40) of the panel structure (30) from each other, respectively, wherein the support posts (42) define intermediate voids by which the holes (34) formed in the top side (36) of the panel structure (30) and the holes (38) formed in the bottom side (40) of the panel structure (30) communicate with each other.

10. A method of forming a tray table (22), comprising:
forming a lattice panel structure (30) comprising a first plurality of openings (34) in a top surface (36) of the panel structure (30), a second plurality of openings (38) in a bottom surface (40), and a plurality of support posts (42) interconnecting the top surface (36) and bottom surface (40) of the panel structure (30), wherein
the plurality of support posts (42) are orthogonal to the top surface (36) and the bottom surface (40),
the first plurality of openings (34) are laterally offset from the second plurality of openings (38), and
the plurality of support posts (42) are disposed in areas not encompassed by the mutually offset holes (34, 38); and
overlaying the top surface (36) of the panel structure (30) with an imperforate cover (32).

11. The method according to claim 10, wherein the step of forming the holes (34) in the top surface (36) and the step of forming the holes (38) in the bottom surface (40) comprises the step of forming holes that are the same shape and size.

12. The method according to claim 10, wherein the step of forming the panel structure (30) includes the step of integrally forming the panel structure (30).

13. The method according to claim 10, wherein overlaying the panel structure (30) comprises attaching the imperforate cover (32) to the panel structure (30) with an adhesive.

14. The method according to claim 10, further comprising overlaying the bottom surface (40) of the panel structure (30) with a second imperforate cover (32).

## Patentansprüche

1. Klapptisch (22) für eine Flugzeugkabine, der Folgendes umfasst:
(a) eine dreidimensionale Gitterplattenstruktur (30) mit einer Oberseite (36) und einer beabstandeten Unterseite (40), wobei mehrere Löcher (34) in der Oberseite (36) ausgebildet sind und mehrere Löcher (38) in der Unterseite (40) ausgebildet sind;
(b) eine nicht perforierte Abdeckung (32), positioniert über der Oberseite (36) der Plattenstruktur (30) zum Bereitstellen einer Tragoberfläche für einen hinter dem Klapptisch sitzenden Fluggast; und
(c) ein Paar Arme (24, 26), befestigt an der Plattenstruktur (30) zum Montieren der Plattenstruktur (30) an einem vor einem dahinter sitzenden Fluggast positionierten Passagiersitz;
**dadurch gekennzeichnet, dass** die in der Oberseite (36) ausgebildeten Löcher (34) wechselseitig bezüglich der in der Unterseite (40) ausgebildeten Löcher (38) versetzt sind, um sich zu schneiden, um Leerstellen mit eingestreuten Stützpfosten (42) zu bilden, die die Oberseite und die Unterseite der Plattenstruktur (30) in Bereichen verbinden, die nicht durch die wechselseitig versetzten Löcher (34, 38) eingeschlossen sind.

2. Klapptisch (22) nach Anspruch 1 und umfassend eine nicht perforierte Abdeckung (32), die die Unterseite (40) der Plattenstruktur (30) einschließt.

3. Klapptisch (22) nach Anspruch 1, wobei:
(a) die wechselseitig versetzten Löcher (34), die in der Oberseite (36) der Plattenstruktur (30) ausgebildet sind, kreisrund sind;
(b) die wechselseitig versetzten Löcher (38), die in der Unterseite (40) der Plattenstruktur (30) ausgebildet sind, kreisrund sind; und
(c) die Stützpfosten (42) im Querschnitt bogenförmige Wandsegmente definieren, entsprechend der Form und Position von bogenförmigen Teilen der Löcher (34), die in der Oberseite (36) der Plattenstruktur (30) ausgebildet sind, und der Löcher (38), die in der Unterseite (40) der Plattenstruktur (30) ausgebildet sind.

4. Klapptisch (22) nach Anspruch 1, wobei die Stützpfosten (42) im Querschnitt Wandsegmente definieren, entsprechend der Form und Position von Teilen der Löcher (34), die in der Oberseite (36) der Plattenstruktur (30) ausgebildet sind, und der Löcher (38), die in der Unterseite (40) der Plattenstruktur (30) ausgebildet sind.

5. Klapptisch (22) nach Anspruch 1 oder Anspruch 4, wobei die wechselseitig versetzten Löcher (34, 38) aus der Gruppe ausgewählt werden, die aus kreisrunden, rechteckigen und sechseckigen Löchern besteht.

6. Klapptisch (22) nach Anspruch 1 oder Anspruch 4, wobei die wechselseitig versetzten Löcher (34, 38) von gleicher Form und Größe sind.

7. Klapptisch (22) nach Anspruch 1 oder Anspruch 4, wobei die Plattenstruktur (30) integral ausgebildet ist.

8. Klapptisch (22) nach Anspruch 4, wobei die Stützpfosten (42) um den Umfang der Löcher (34), die in der Oberseite (36) der Plattenstruktur (30) ausgebildet sind, und der Löcher (38), die in der Unterseite (40) der Plattenstruktur (30) ausgebildet sind, beabstandet sind.

9. Klapptisch (22) nach Anspruch 4, wobei die Löcher (34), die in der Oberseite (36) der Plattenstruktur (30) ausgebildet sind, und die Löcher (38), die in der Unterseite (40) der Plattenstruktur (30) ausgebildet sind, entsprechende obere und untere Zwischenplattenteile definieren, die die Löcher (34), die in der Oberseite (36) der Plattenstruktur (30) ausgebildet sind, voneinander isolieren bzw. die Löcher (38), die in der Unterseite (40) der Plattenstruktur (30) ausgebildet sind, voneinander isolieren, wobei die Stützpfosten (42) Zwischenleerstellen definieren, durch die die Löcher (34), die in der Oberseite (36) der Plattenstruktur (30) ausgebildet sind, und die Löcher (38), die in der Unterseite (40) der Plattenstruktur (30) ausgebildet sind, miteinander kommunizieren.

10. Verfahren zum Ausbilden eines Klapptischs (22), das Folgendes umfasst:
Ausbilden einer Gitterplattenstruktur (30), umfassend erste mehrere Öffnungen (34) in einer oberen Oberfläche (36) der Plattenstruktur (30), zweite mehrere Öffnungen (38) in einer unteren Oberfläche (40), und mehrere Stützpfosten (42), die die obere Oberfläche (36) und die untere Oberfläche (40) der Plattenstruktur (30) verbinden, wobei
die mehreren Stützpfosten (42) orthogonal zur oberen Oberfläche (36) und zur unteren Oberfläche (40) sind,
die ersten mehreren Öffnungen (34) lateral gegen die zweiten mehreren Öffnungen (38) versetzt sind, und
die mehreren Stützpfosten (42) in Bereichen angeordnet sind, die nicht durch die wechselseitig versetzten Löcher (34, 38) eingeschlossen sind; und
Verkleiden der oberen Oberfläche (36) der Plattenstruktur (30) mit einer nicht perforierten Abdeckung (32).

11. Verfahren nach Anspruch 10, wobei der Schritt des Ausbildens der Löcher (34) in der oberen Oberfläche (36) und der Schritt des Ausbildens der Löcher (38) in der unteren Oberfläche (40) den Schritt des Ausbildens von Löchern der gleichen Form und Größe umfasst.

12. Verfahren nach Anspruch 10, wobei der Schritt des Ausbildens der Plattenstruktur (30) den Schritt des integralen Ausformens der Plattenstruktur (30) umfasst.

13. Verfahren nach Anspruch 10, wobei Verkleiden der Plattenstruktur (30) Befestigen der nicht perforierten Abdeckung (32) an der Plattenstruktur (30) mit einem Klebstoff umfasst.

14. Verfahren nach Anspruch 10, ferner umfassend Verkleiden der unteren Oberfläche (40) der Plattenstruktur (30) mit einer zweiten nicht perforierten Abdeckung (32).

## Revendications

1. Table plateau (22) pour une cabine d'aéronef, comprenant :
(a) une structure de panneau en treillis tridimensionnelle (30) ayant un côté supérieur (36) et un côté inférieur espacé (40), une pluralité de trous (34) étant formés dans le côté supérieur (36) et une pluralité de trous (38) étant formés dans le côté inférieur (40) ;
(b) un revêtement non perforé (32) positionné par-dessus le côté supérieur (36) de la structure de panneau (30) pour fournir une surface de support pour un occupant assis à l'arrière de la table plateau ; et
(c) une paire de bras (24, 26) attachés à la structure de panneau (30) pour monter la structure de panneau (30) sur un siège de passager positionné devant un occupant assis à l'arrière ;
**caractérisée en ce que** les trous (34) formés dans le côté supérieur (36) sont mutuellement décalés par rapport aux trous (38) formés dans le côté inférieur (40) de manière à s'intersecter pour former des vides avec des colonnettes de support interposées (42) reliant le côté supérieur et le côté inférieur de la structure de panneau (30) dans des zones non couvertes par les trous mutuellement décalés (34, 38).

2. Table plateau (22) selon la revendication 1, et comportant un revêtement non perforé (32) enveloppant le côté inférieur (40) de la structure de panneau (30).

3. Table plateau (22) selon la revendication 1, dans laquelle :
(a) les trous mutuellement décalés (34) formés dans le côté supérieur (36) de la structure de panneau (30) sont circulaires ;
(b) les trous mutuellement décalés (38) formés dans le côté inférieur (40) de la structure de panneau (30) sont circulaires ; et
(c) les colonnettes de support (42) définissent, en section transversale, des segments de paroi arqués correspondant à la forme et à la position de portions arquées des trous (34) formés dans le côté supérieur (36) de la structure de panneau (30) et des trous (38) formés dans le côté inférieur (40) de la structure de panneau (30).

4. Table plateau (22) selon la revendication 1, dans laquelle les colonnettes de support (42) définissent, en section transversale, des segments de paroi correspondant à la forme et à la position de portions des trous (34) formés dans le côté supérieur (36) de la structure de panneau (30) et des trous (38) formés dans le côté inférieur (40) de la structure de panneau (30).

5. Table plateau (22) selon la revendication 1 ou la revendication 4, dans laquelle les trous mutuellement décalés (34, 38) sont choisis dans le groupe constitué de trous circulaires, rectangulaires et hexagonaux.

6. Table plateau (22) selon la revendication 1 ou la revendication 4, dans laquelle les trous mutuellement décalés (34, 38) ont la même forme et la même taille.

7. Table plateau (22) selon la revendication 1 ou la revendication 4, dans laquelle la structure de panneau (30) est formée intégralement.

8. Table plateau (22) selon la revendication 4, dans laquelle les colonnettes de support (42) sont espacées autour de la périphérie des trous (34) formés dans le côté supérieur (36) de la structure de panneau (30) et des trous (38) formés dans le côté inférieur (40) de la structure de panneau (30) .

9. Table plateau (22) selon la revendication 4, dans laquelle les trous (34) formés dans le côté supérieur (36) de la structure de panneau (30) et les trous (38) formés dans le côté inférieur (40) de la structure de panneau (30) définissent des portions de panneau supérieure et inférieure intermédiaires respectives qui isolent les trous (34) formés dans le côté supérieur (36) de la structure de panneau (30) les uns des autres et qui isolent les trous (38) formés dans le côté inférieur (40) de la structure de panneau (30) les uns des autres, respectivement, les colonnettes de support (42) définissant des vides intermédiaires par lesquels les trous (34) formés dans le côté supérieur (36) de la structure de panneau (30) et les trous (38) formés dans le côté inférieur (40) de la structure de panneau (30) communiquent les uns avec les autres.

10. Procédé de formation d'une table plateau (22), comprenant les étapes suivantes :
la formation d'une structure de panneau en treillis (30) comprenant une première pluralité d'ouvertures (34) dans une surface supérieure (36) de la structure de panneau (30), une deuxième pluralité d'ouvertures (38) dans une surface inférieure (40), et une pluralité de colonnettes de support (42) reliant entre elles la surface supérieure (36) et la surface inférieure (40) de la structure de panneau (30),
la pluralité de colonnettes de support (42) étant perpendiculaires à la surface supérieure (36) et à la surface inférieure (40),
la première pluralité d'ouvertures (34) étant décalées latéralement de la deuxième pluralité d'ouvertures (38), et
la pluralité de colonnettes de support (42) étant disposées dans des zones non couvertes par les trous mutuellement décalés (34, 38) ; et
le recouvrement de la surface supérieure (36) de la structure de panneau (30) avec un recouvrement non perforé (32).

11. Procédé selon la revendication 10, dans lequel l'étape de formation des trous (34) dans la surface supérieure (36) et l'étape de formation des trous (38) dans la surface intérieure (40) comprennent l'étape de formation de trous qui ont la même forme et la même taille.

12. Procédé selon la revendication 10, dans lequel l'étape de formation de la structure de panneau (30) inclut l'étape de formation sous forme intégrale de la structure de panneau (30).

13. Procédé selon la revendication 10, dans lequel le recouvrement de la structure de panneau (30) comprend la fixation du recouvrement non perforé (32) sur la structure de panneau (30) avec un adhésif.

14. Procédé selon la revendication 10, comprenant en outre le recouvrement de la surface inférieure (40) de la structure de panneau (30) avec un deuxième recouvrement non perforé (32).
